# FASCICULE DE BREVET EUROPEEN

(11) **EP 2 456 537 B1**
(45) Date de publication et mention de la délivrance du brevet: **12.03.2014**
(21) Numéro de dépôt: 10732395.8
(22) Date de dépôt: 16.07.2010
(51) Int. Cl.: G21F 9/30, G21F 9/04

(54) **PROCEDE DE REGENERATION D'UN FILTRE SOLIDE A IODE**
VERFAHREN ZUR REGENERIERUNG EINES FESTIODFILTERS
METHOD FOR REGENERATING A SOLID IODINE FILTER

(30) Priorité: 20.07.2009 FR 0955029
(43) Date de publication de la demande: 30.05.2012
(73) Titulaire: Commissariat à l'Énergie Atomique et aux Énergies Alternatives, 75015 Paris (FR); Areva NC, 75009 Paris (FR)
(72) Inventeur: VAUDANO, Aimé, F-30200 Bagnols sur Cèze (FR); PAYOT, Frédéric, F-13100 Aix en Provence (FR); DONNAREL, Jean-Pierre, F-31130 Saint Alexandre (FR); DEVISME, Frédéric, F-30150 Roquemaure (FR)
(74) Mandataire: Ilgart, Jean-Christophe
(86) Numéro de dépôt international: PCT/EP2010/060301
(87) Numéro de publication internationale: WO 2011/009816

(56) Documents cités:
- WO-A1-02/073629
- US-A- 3 658 467
- US-A- 4 088 737
- US-A- 4 382 879

## Description

### DOMAINE TECHNIQUE

La présente invention se rapporte à un procédé permettant de régénérer un filtre solide à iode du type de ceux utilisés dans les usines de retraitement des combustibles nucléaires irradiés pour piéger l'iode résiduel présent dans les effluents gazeux produits au cours de ce retraitement.

### ÉTAT DE LA TECHNIQUE ANTÉRIEURE

Dans les usines de retraitement des combustibles nucléaires irradiés, la récupération de l'iode résiduel contenu dans les effluents gazeux sous forme d'iode moléculaire I₂ et/ou de composés organiques de l'iode tels que les iodo-alcanes ou iodures d'alkyle, est assurée, avant rejet de ces effluents gazeux dans l'environnement, par des pièges solides minéraux dénommés communément « filtres à iode ».

Il s'agit de cartouches remplies de billes poreuses de silice ou d'alumine qui sont imprégnées d'argent sous forme de nitrate. Dans ces filtres à iode, l'iode réagit avec le nitrate d'argent pour former des composés d'iode tels que l'iodure et l'iodate d'argent avec éventuellement une faible présence d'iode moléculaire I₂ physisorbé.

Ces filtres à iode constituent un déchet solide contaminé en ¹²⁹I (qui est un radioélément à longue vie) qui ne peut être stocké directement en surface et pour lequel on ne dispose aujourd'hui d'aucune matrice pour un entreposage en profondeur.

Il a, de ce fait, été proposé, dans la demande internationale PCT publiée sous le numéro 02/073629, un procédé qui permet de décontaminer un filtre à iode usagé, soit en iode, soit en iode et en argent, et d'obtenir ainsi son déclassement pour admission, après conditionnement dans une matrice en ciment, dans un centre de stockage en surface.

Selon ce procédé, le filtre est décontaminé en iode par immersion dans une solution aqueuse basique, qui est chauffée à 60°C et qui contient un agent réducteur comme, par exemple, l'acide ascorbique, propre à transformer les composés d'iode en anions iodures (I⁻) solubles. Il peut, de plus, être décontaminé en argent, soit simultanément par addition de cyanure à la solution aqueuse basique utilisée pour la décontamination en iode, soit successivement par lavage du filtre dans une solution acide, typiquement une solution d'acide nitrique, propre à dissoudre l'argent qu'il contient.

Si ce procédé représente indéniablement une avancée technique, il présente toutefois l'inconvénient :
* dans le cas ou l'argent est retiré du filtre, d'ajouter au retraitement des combustibles nucléaires irradiés, déjà générateur de volumes importants d'effluents liquides non valorisables, des effluents liquides supplémentaires, chargés en argent qui devront être traités, et
* dans le cas ou l'argent n'est pas retiré du filtre, de perdre l'argent qui reste dans ce filtre.

Or, il se trouve que, dans le cadre de leurs travaux sur les filtres à iode, les Inventeurs ont constaté :
- d'une part, que contre toute attente, la structure et les caractéristiques physiques (porosité, surface spécifique, ...) de ces filtres ne sont que très peu altérées par une utilisation de plusieurs années en usine, notamment lorsqu'ils comprennent un support en alumine ;
- d'autre part, que le traitement réducteur préconisé dans WO-A-02/073629 permet, lorsqu'il est réalisé à la température ambiante, de décontaminer très efficacement ces filtres en iode sans toutefois extraire l'argent présent dans les filtres ni altérer profondément la structure et les propriétés physicochimiques de ces filtres ; et
- enfin, qu'il est possible, après avoir extrait, de filtres à iode usagés, à la fois l'iode et l'argent qu'ils contiennent, de les ré-imprégner très efficacement par de l'argent et ce, en utilisant notamment, comme solution d'imprégnation, la solution aqueuse acide ayant servi à les décontaminer en argent ou une solution préparée à partir de celle-ci.

Et c'est sur la base de ces constatations que les Inventeurs ont réalisé la présente invention.

### EXPOSÉ DE L'INVENTION

La présente invention a donc pour objet un procédé de régénération d'un filtre solide contenant de l'iode sous forme d'iodure et/ou d'iodate d'argent et éventuellement de l'iode moléculaire physisorbé en un filtre solide contenant de l'argent sous forme de nitrate, qui comprend les étapes suivantes :
a) extraire du filtre l'iode qu'il contient par mise en contact de ce filtre avec une solution aqueuse basique contenant un agent réducteur, cette extraction étant réalisée à température ambiante, puis séparation du filtre de cette solution aqueuse basique ;
b) extraire du filtre obtenu à l'étape a) l'argent qu'il contient par mise en contact de ce filtre avec une solution aqueuse acide, puis séparation du filtre de cette solution aqueuse acide ; et
c) imprégner d'argent le filtre obtenu à l'étape b) par mise en contact de ce filtre avec une solution de nitrate d'argent, puis sécher le filtre.

Conformément à l'invention, l'agent réducteur présent dans la solution aqueuse basique utilisée à l'étape a) peut être l'un quelconque des agents réducteurs dont l'utilisation est préconisée dans WO-A-02/073629, à savoir l'hydroxylamine, un sel d'hydroxylamine, l'acide ascorbique, un sel d'acide ascorbique, un ester d'ascorbyle, le borohydrure de sodium, l'hypophosphite de sodium, le formaldéhyde, l'urée, l'acide formique, ou encore un mélange de ceux-ci.

Toutefois, pour des raisons à la fois de simplicité de mise en oeuvre et de compatibilité avec les installations de retraitement existantes, on préfère que l'agent réducteur soit l'acide ascorbique ou l'un ses sels, notamment l'ascorbate de sodium, auquel cas il est, de préférence, présent dans la solution aqueuse basique à une concentration de 0,5 à 2 moles/L et, mieux encore, de l'ordre de 1 mole/L.

Cette solution aqueuse basique présente de préférence un pH de 10 à 14, ce pH pouvant être indifféremment obtenu au moyen d'une base minérale comme la soude, ou d'une base organique hydrosoluble comme l'hydroxyde de tétraméthylammonium, l'ammoniaque ou analogue.

L'extraction de l'iode du filtre au moyen de la solution aqueuse basique est avantageusement réalisée en lavant le filtre avec cette solution, par exemple en faisant circuler lentement cette dernière au travers du filtre, en circuit fermé ou ouvert.

Toutefois, elle peut également être réalisée par un simple trempage du filtre dans ladite solution.

Dans tous les cas, on utilise, de préférence, de 4 à 10 mL de solution aqueuse basique par g de filtre et la durée du traitement (lavage ou trempage) est avantageusement comprise entre 2 et 10 heures et, mieux encore, de 2 à 4 heures.

Après quoi, on sépare le filtre de la solution aqueuse basique et on soumet ce filtre de préférence à un, et mieux encore, à plusieurs rinçages à l'eau, avantageusement déminéralisée, pour éliminer du filtre toute trace d'agent réducteur.

Dans ces conditions, on obtient à l'issue de l'étape a) un filtre dont la teneur résiduelle en iode est au plus égale à 3 mg par g de filtre, ce qui correspond à un facteur de décontamination égal ou supérieur à 30 pour une teneur initiale d'environ 100 mg d'iode par g de filtre, et dont la teneur en argent est sensiblement égale à la teneur initiale en argent du filtre.

A l'étape b), on préfère utiliser comme solution aqueuse acide, une solution d'acide nitrique qui, par dissolution de l'argent présent dans le filtre, va devenir progressivement une solution de nitrate d'argent qu'il sera alors possible d'utiliser à l'étape c), soit telle quelle, soit après un ajustement de sa teneur en argent et/ou de son acidité, pour imprégner d'argent le filtre. Cette solution d'acide nitrique présente, de préférence, une concentration en acide nitrique de 0,2 à 6 moles/L et, mieux encore, de l'ordre de 1 mole/L.

L'extraction de l'argent du filtre au moyen de la solution aqueuse acide est avantageusement réalisée en lavant le filtre avec cette solution, par exemple en faisant circuler lentement cette dernière au travers du filtre, en circuit fermé ou ouvert.

Toutefois, là également, il est possible de réaliser cette extraction par un simple trempage du filtre dans ladite solution.

Dans tous les cas, cette extraction est, de préférence, réalisée à une température de 20 à 60°C en utilisant de 1 à 30 mL de solution aqueuse acide par g de filtre, et la durée du traitement (lavage ou trempage) est avantageusement comprise entre 15 minutes et 24 heures.

Après séparation du filtre de cette solution, on soumet, de préférence, le filtre à un séchage de 5 à 24 heures, que l'on réalise avantageusement sous air en étuve ou sous un vide partiel (par exemple, de l'ordre de 100 Pa), à une température inférieure à 120°C. Ce séchage peut être complété par un séchage sous atmosphère inerte, par exemple sous un flux d'argon, à des températures de 120 à 500°C, ce dernier type de séchage permettant, en effet, d'améliorer les performances de l'imprégnation du filtre en argent.

Conformément à l'invention, la solution de nitrate d'argent que l'on utilise pour effectuer cette imprégnation (étape c) du procédé) peut être une solution que l'on prépare spécifiquement à cette fin, auquel cas il peut s'agir aussi bien d'une solution aqueuse, acide ou non, d'une solution organique ayant, par exemple, pour solvant, l'acétonitrile.

Toutefois, on préfère utiliser comme solution d'imprégnation, la solution aqueuse acide ayant servi à extraire l'argent du filtre à l'étape b), après ajustement, si nécessaire, de sa concentration en argent et/ou de son acidité, dans la mesure où ceci permet à la fois de réduire les quantités de réactifs et de solvants employés au cours du procédé ainsi que les volumes d'effluents produits, et de valoriser l'argent extrait du filtre.

Dans tous les cas, il est souhaitable que cette solution d'imprégnation présente une concentration en argent de 20 à 200 g/L et, mieux encore, de l'ordre de 100 g/L.

Sa mise en contact avec le filtre est avantageusement réalisée par trempage mais une imprégnation du filtre par circulation de la solution d'imprégnation au travers de ce filtre, en circuit fermé ou ouvert, peut également être envisagée.

Quant au séchage du filtre prévu à l'étape c), il est, de préférence, effectué une température inférieure à 120°C, à la pression atmosphérique ou sous un vide partiel.

Dans ces conditions, on obtient à l'issue de l'étape c) d'une part, un filtre qui contient environ 12% en masse d'argent élémentaire sous forme de nitrate, soit une teneur en argent élémentaire équivalente à celle que présentent classiquement les filtres à iode avant usage, et, d'autre part, une solution appauvrie en nitrate d'argent que l'on peut soit envoyer au rebus soit réutiliser pour extraire d'un autre filtre l'argent qu'il contient s'il s'agit d'une solution aqueuse acide.

Les filtres solides susceptibles d'être régénérés par le procédé selon l'invention peuvent être de divers types dès lors qu'ils comprennent un support poreux inerte, minéral ou organique, susceptible d'être imprégné d'argent sous forme de nitrate.

Il peut notamment s'agir de filtres à billes poreuses de silice ou d'alumine du type de ceux utilisés dans les usines de retraitement des combustibles usés.

Le procédé selon l'invention présente de nombreux avantages.

En effet, non seulement il permet de réutiliser des filtres à iode usagés et/ou l'argent extrait de ces filtres et de faire ainsi l'économie de l'achat de filtres neufs et/ou de nitrate d'argent, mais il permet également de réduire de façon substantielle les volumes de déchets ultimes et les volumes d'effluents liquides générés par le retraitement de combustibles nucléaires usés.

A cet égard, il convient de noter que l'argent extrait de filtres à iode usagés, conformément à l'invention, peut également être utilisé pour imprégner des supports neufs de filtres.

En outre, le procédé selon l'invention présente l'avantage d'être simple à mettre en oeuvre et de ne faire appel qu'à des réactifs et des solvants d'utilisation courante dans l'industrie chimique, en particulier nucléaire.

S'il est vrai qu'il présente un intérêt tout particulier pour les usines de retraitement de combustibles nucléaires usés, il peut toutefois également être mis à profit pour régénérer les filtres à iode qui sont utilisés dans d'autres types d'installations nucléaires qui, de par leur activité, sont amenées à produire des effluents gazeux contaminés en iode, ce qui est, par exemple, le cas des unités de production d'isotopes radioactif, ou bien qui sont équipées de pièges à iode dits « de sécurité », prévus pour ne fonctionner qu'en cas de rejet accidentel d'iode, ce qui est, par exemple, le cas des centrales nucléaires.

D'autres caractéristiques et avantages de l'invention apparaîtront mieux à la lecture des exemples qui suivent et qui se rapportent à des tests expérimentaux ayant permis de valider le procédé selon l'invention.

Bien entendu, ces exemples ne sont donnés qu'à titre d'illustrations de l'objet de l'invention et ne constituent en aucun cas une limitation de cet objet.

### Exemple 1 : Extraction de l'iode d'un filtre à iode usagé

Des tests ayant permis de valider l'étape a) du procédé selon l'invention ont été réalisés sur des échantillons d'un filtre à iode ayant fonctionné pendant 6 ans dans une usine de retraitement de combustibles nucléaires irradiés.

Ce filtre était initialement constitué de billes poreuses d'alumine (diamètre : 1 à 2 mm ; surface spécifique : ≈ 100 m²/g ; volume poreux total : = 0,25 mL/g) imprégnées de nitrate d'argent à 12% massique en argent.

Après 6 ans d'utilisation en usine, sa charge moyenne en iode était d'environ 60 mg d'iode/g de billes d'alumine.

Des observations au microscope électronique à balayage ainsi que des mesures de la surface spécifique et du volume poreux total du filtre n'ont pas permis de mettre en évidence de différences notables entre les caractéristiques structurelles et physiques présentées par ce filtre avant et après son utilisation.

L'extraction de l'iode présent dans les billes a été réalisée en plaçant chacun des échantillons à l'intérieur d'un tube, entre deux filtres de diamètre inférieur à celui des billes, et en faisant circuler dans le tube une solution aqueuse contenant 1 mole/L de soude et 2 moles/L d'ascorbate de sodium, de température égale à la température ambiante, à une vitesse de 10 mm/seconde, de sorte que cette solution traverse le lit formé par les billes. La circulation de la solution aqueuse basique a été maintenue pendant 3 heures.

Après quoi, les échantillons ont été sortis du tube, lavés à l'eau, toujours à température ambiante et séchés pendant 12 heures à 100°C, ce séchage étant essentiellement destiné à permettre leurs analyses.

Les résultats de ces analyses ont montré que, quelque soit l'échantillon traité :
- la teneur résiduelle en iode des billes est inférieure à 3 mg d'iode/g de billes, ce qui correspond à un facteur de décontamination au moins égal à 30 ;
- la teneur résiduelle en argent des billes est proche de leur teneur initiale en argent (soit 12% massique) ; et que
- les billes ont conservé leurs caractéristiques initiales, notamment en termes de diamètre et de dureté, et que la solution aqueuse basique utilisée pour les décontaminer en iode contient très peu d'éléments susceptibles de traduire une éventuelle corrosion des billes (alumine dissoute, matières en suspension, ...).

### Exemple 2 : Extraction de l'argent du filtre

Des tests ayant permis de valider l'étape b) du procédé selon l'invention ont été réalisés en utilisant des échantillons de laboratoire, constitués de billes poreuses d'alumine de fabrication identique à celles des billes formant le support solide du filtre à iode utilisé dans l'exemple 1, que l'on a préalablement chargées en iode et en nitrate d'argent (à hauteur de 12% massique) puis décontaminées en iode.

L'extraction de l'argent présent dans les billes a été réalisée en plaçant les échantillons à l'intérieur d'un tube, entre deux filtres de diamètre inférieur à celui des billes, et en faisant circuler dans ce tube une solution nitrique d'acidité 3 N et de température égale à 20°C, pendant 6 heures.

Après retrait des échantillons du tube, leur teneur résiduelle en argent a été mesurée.

Les résultats de ces mesures ont montré que la décontamination en argent des billes est quantitative.

### Exemple 3 : Imprégnation du filtre par de l'argent

Des tests ayant permis de valider l'étape c) du procédé selon l'invention ont été réalisés en utilisant des échantillons de laboratoire, constitués de billes poreuses d'alumine de fabrication identique à celles des billes formant le support solide du filtre à iode utilisé dans l'exemple 1, vierges (c'est-à-dire n'ayant jamais été imprégnées d'argent) ou ayant été préalablement décontaminées en argent.

L'imprégnation des billes par de l'argent a été réalisée en trempant les échantillons, après les avoir placés dans un panier, dans une solution d'imprégnation contenant 1 mole/L d'argent et de température égale à la température ambiante, pendant 1 heure.

Après retrait des échantillons de la solution d'imprégnation et séchage, leur teneur en argent a été mesurée.

Les résultats de ces mesures ont montré que cette teneur est de l'ordre de 12% en masse.

## Revendications

1. Procédé de régénération d'un filtre solide contenant de l'iode sous forme d'iodure et/ou d'iodate d'argent et éventuellement de l'iode moléculaire physisorbé en un filtre solide contenant de l'argent sous forme de nitrate, qui comprend les étapes suivantes :
a) extraire du filtre l'iode qu'il contient par mise en contact de ce filtre avec une solution aqueuse basique contenant un agent réducteur, cette extraction étant réalisée à température ambiante, puis séparation du filtre de cette solution aqueuse basique ;
b) extraire du filtre obtenu à l'étape a) l'argent qu'il contient par mise en contact de ce filtre avec une solution aqueuse acide, puis séparation du filtre de cette solution aqueuse acide ; et
c) imprégner d'argent le filtre obtenu à l'étape b) par mise en contact de ce filtre avec une solution de nitrate d'argent, puis sécher le filtre.

2. Procédé selon la revendication 1, dans lequel l'agent réducteur utilisé à l'étape a) est l'acide ascorbique ou l'un de ses sels.

3. Procédé selon la revendication 1 ou la revendication 2, dans lequel la solution aqueuse basique utilisée à l'étape a) comprend de 0,5 à 2 moles/L d'acide ascorbique ou de l'un de ses sels et présente un pH de 10 à 14.

4. Procédé selon l'une quelconque des revendications précédentes, dans lequel la solution aqueuse acide utilisée à l'étape b) est une solution d'acide nitrique ayant une concentration en acide nitrique de 0,2 à 6 moles/L.

5. Procédé selon l'une quelconque des revendications précédentes, dans lequel l'étape b) comprend de plus, après séparation du filtre de la solution aqueuse acide, un séchage de ce filtre de 5 à 24 heures, sous air en étuve ou sous un vide partiel à une température inférieure à 120°C, puis éventuellement sous gaz inerte à une température de 120 à 500°C.

6. Procédé selon l'une quelconque des revendications précédentes, dans lequel l'étape c) est réalisée en utilisant comme solution de nitrate d'argent, la solution aqueuse acide obtenue à l'issue de l'étape b), après ajustement, si nécessaire, de sa teneur en argent et/ou de son acidité.

7. Procédé selon l'une quelconque des revendications précédentes, dans lequel la solution de nitrate d'argent utilisée à l'étape c) a une concentration en argent de 20 à 200 g/L.

8. Procédé selon l'une quelconque des revendications précédentes, dans lequel le séchage du filtre prévu à l'étape c) est effectué à une température inférieure à 120°C, à la pression atmosphérique ou sous un vide partiel.

9. Procédé selon l'une quelconque des revendications précédentes, dans lequel le filtre contient environ 12 % en masse d'argent élémentaire sous forme de nitrate à l'issue de l'étape c).

10. Procédé selon l'une quelconque des revendications précédentes, dans lequel le filtre comporte un support solide minéral poreux consistant en des billes poreuses de silice ou d'alumine.

## Patentansprüche

1. Verfahren zur Regenerierung eines Feststofffilters, welcher Jod in Form von Jodid und/oder Silberjodat und gegebenenfalls in Form von molekularem Jod, welches in einem Feststofffilter physisorbiert ist, aufweist, wobei der Feststofffilter Silber in Form von Nitrat aufweist, wobei das Verfahren die folgenden Schritte umfasst:
a) Extraktion des in dem Filter enthaltenen Jod, indem der Filter mit einer basischen wässrigen Lösung, welche ein Reduktionsmittel enthält, in Kontakt gebracht wird, wobei die Extraktion bei Umgebungstemperatur durchgeführt wird, und anschließend eine Trennung dieser basischen wässrigen Lösung von dem Filter erfolgt;
b) Extraktion aus dem in Schritt a) erhaltenen Filter darin enthaltenes Silber, indem der Filter mit einer sauren wässrigen Lösung in Kontakt gebracht wird, und anschließende Abscheidung der sauren wässrigen Lösung von dem Filter; und
c) Tränken des in Schritt b) erhaltenen Filters mit Silber, indem der Filter mit einer Silbernitratlösung in Kontakt gebracht wird, und der Filter dann abgetrocknet wird.

2. Verfahren nach Anspruch 1, bei welchem das in Schritt a) verwendete Reduktionsmittel Ascorbinsäure oder eines ihrer Salze ist.

3. Verfahren nach Anspruch 1 oder Anspruch 2, bei welchem die in Schritt a) verwendete basische wässrige Lösung 0,5 bis 2 mol/l Ascorbinsäure oder eines ihrer Salze auf und einen pH-Wert von 10 bis 14 aufweist.

4. Verfahren nach einem der vorhergehenden Ansprüche, bei welchem die in Schritt b) verwendete saure wässrige Lösung eine Lösung aus Salpetersäure ist, welche eine Salpetersäurekonzentration von 0,2 bis 6 mol/l aufweist.

5. Verfahren nach einem der vorhergehenden Ansprüche, bei welchem Schritt b) des Weiteren nach der Abscheidung der sauren wässrigen Lösung von dem Filter eine Trocknung des Filters von 5 bis 24 Stunden unter Einwirkung von Wärmeofenluft oder unter einem Teilvakuum bei einer Temperatur niedriger 120°C aufweist, sowie dann möglicherweise unter Einwirkung von Inertgas bei einer Temperatur von 120 bis 500°C.

6. Verfahren nach einem der vorhergehenden Ansprüche, bei welchem Schritt c) durchgeführt wird, indem als Silbernitratlösung die saure wässrige Lösung verwendet wird, welche am Ende von Schritt b) erhalten wurde, nach Anpassung deren Silbergehalts und/oder deren Säuregehalts, falls nötig.

7. Verfahren nach einem der vorhergehenden Ansprüche, bei welchem die in Schritt c) verwendete Silbernitratlösung eine Silberkonzentration von 20 bis 200 g/l aufweist.

8. Verfahren nach einem der vorhergehenden Ansprüche, bei welchem die Trocknung des bei Schritt c) vorgesehenen Filters bei einer Temperatur niedriger 120°C bei atmosphärischen Druck oder unter Teilvakuum erfolgt.

9. Verfahren nach einem der vorhergehenden Ansprüche, bei welchem der Filter in etwa 12 Masseprozent elementares Silber in Form von Nitrat am Ende von Schritt c) aufweist.

10. Verfahren nach einem der vorhergehenden Ansprüche, bei welchem der Filter einen porösen mineralischen festen Träger aufweist, welcher aus porösen Kügelchen aus Siliziumdioxid ader Aluminiumoxid besteht.

## Claims

1. A method for regenerating a solid filter containing iodine in the form of silver iodide and/or iodate and possibly molecular iodine physisorbed in a solid filter containing silver in the form of nitrate, which comprises the following steps:
a) extracting from the filter the iodine which it contains by putting this filter into contact with a basic aqueous solution containing a reducing agent, this extraction being achieved at room temperature, and then separating the filter from this basic aqueous solution;
b) extracting from the filter obtained in step a) the silver which it contains by putting this filter into contact with an acid aqueous solution, and then separating the filter from this acid aqueous solution; and
c) impregnating with silver the filter obtained in step b) by putting this filter into contact with a silver nitrate solution, and then drying the filter.

2. The method according to claim 1, wherein the reducing agent used in step a) is ascorbic acid or one of its salts.

3. The method according to claim 1 or claim 2, wherein the basis aqueous solution used in step a) comprises from 0.5 to 2 mol/L of ascorbic acid or of one of its salts and has a pH from 10 to 14.

4. The method according to any of the preceding claims, wherein the acid aqueous solution used in step b) is a nitric acid solution having a nitric acid concentration from 0.2 to 6 mol/L.

5. The method according to any of the preceding claims, wherein step b) further comprises, after separating the filter from the acid aqueous solution, drying of this filter for 5 to 24 hours, in air in an oven or under a partial vacuum at a temperature below 120°C, and then optionally under an inert gas at a temperature from 120 to 500°C.

6. The method according to any of the preceding claims, wherein step c) is achieved by using as a silver nitrate solution, the acid aqueous solution obtained at the end of step b), after adjusting if necessary its silver content and/or its acidity.

7. The method according to any of the preceding claims, wherein the silver nitrate solution used in step c) has a silver concentration from 20 to 200 g/L.

8. The method according to any of the preceding claims, wherein the drying of the filter provided in step c) is carried out at a temperature below 120°C, at atmospheric pressure or under a partial vacuum.

9. The method according to any of the preceding claims, wherein the filter contains about 12% by mass of elementary silver in the form of nitrate at the end of step c).

10. The method according to any of the preceding claims, wherein the filter includes a porous mineral solid support consisting in porous silica or alumina beads.
